# EUROPÄISCHE PATENTSCHRIFT

(11) **EP 4 066 356 B1**
(45) Veröffentlichungstag und Bekanntmachung des Hinweises auf die Patenterteilung: **29.04.2026**
(21) Anmeldenummer: 20796789.4
(22) Anmeldetag: 22.10.2020
(51) Int. Cl.: H02K 1/2733, H02K 15/035, H02K 7/14

(54) **ROTOR FÜR EINE ELEKTROMASCHINE UND VERFAHREN ZUR HERSTELLUNG EINES ROTORS**
ROTOR FOR AN ELECTRIC MACHINE AND METHOD FOR PRODUCING A ROTOR
ROTOR POUR UNE MACHINE ÉLECTRIQUE ET PROCÉDÉ DE PRODUCTION D'UN ROTOR

(30) Priorität: 28.11.2019 DE 102019218437
(43) Veröffentlichungstag der Anmeldung: 05.10.2022
(73) Patentinhaber: Robert Bosch GmbH, 70442 Stuttgart (DE)
(72) Erfinder: PAGONI, Thomas, 70794 Filderstadt (DE); BONASEWICZ, Robert, 70563 Stuttgart (DE); MENSAK, Simon, 70469 Stuttgart (DE); EITZERT, Marco, 70771 Leinfelden-Echterdingen (DE)
(86) Internationale Anmeldenummer: PCT/EP2020/079782
(87) Internationale Veröffentlichungsnummer: WO 2021/104765

(56) Entgegenhaltungen:
- EP-A2- 1 737 105
- WO-A1-2008/019932
- WO-A2-2007/067738
- US-A1- 2005 225 190
- US-A1- 2014 028 121

## Beschreibung

Die Erfindung betrifft einen Rotor für eine Elektromaschine sowie ein Verfahren zur Herstellung des Rotors nach der Gattung der unabhängigen Ansprüche. Ferner betrifft die Erfindung eine Elektromaschine mit dem erfindungsgemäßen Rotor bzw. mit einem nach dem erfindungsgemäßen Verfahren hergestellten Rotor sowie ein elektrisches Bearbeitungsgerät mit einer entsprechenden Elektromaschine.

### Stand der Technik

Unter einer bürstenlosen Gleichstrommaschine - nachfolgend auch kurz BLDC-(brushless direct current) bzw. EC- (electronically commutated) Maschine genannt - soll insbesondere eine Elektromaschine mit einer statorseitigen Drehstromwicklung verstanden werden, die derart steuer- oder regelbar ist, dass ein drehendes magnetisches Feld erzeugt wird, welches einen permanenterregten Rotor mitzieht. Alternativ ist auch denkbar, den erfindungsgemäßen Rotor im Zusammenhang mit einem Generator zu verwenden.

Rotoren für bürstenlose Gleichstrommaschinen mit permanenterregten Magneten werden in der Regel in zwei unterschiedlichen Ausführungen hergestellt. Zum einen können die Permanentmagnete unterschiedlicher Polarität in so genannten "Taschen" eines hohlzylinderförmigen Grundkörpers vergraben werden, zum anderen ist es möglich, die Magnete bzw. einen entsprechend im Wechsel polarisierten Magnetring von außen als Oberflächenmagnete auf den Grundkörper aufzubringen.

Der Grundkörper besteht meistens aus einer Vielzahl von zu einem Rotorblechpaket gestapelter Rotorlaminationen, die jeweils aus einem weichmagnetischen Blech ausgestanzt wurden. Es sind aber auch andere Ausgestaltungen von Rotoren für Elektromaschinen, insbesondere für EC-Maschinen, denkbar. So kann der hohlzylinderförmigen Grundkörper des Rotors beispielsweise aus Verbundwerkstoffen (Soft Magnetic Composites - SMC) aufgebaut sein. SMC-Werkstoffe bestehen aus hoch reinem Eisenpulver mit einer speziellen Oberflächenbeschichtung auf jedem einzelnen Partikel. Diese elektrisch isolierende Oberfläche gewährleistet einen hohen elektrischen Widerstand auch nach dem Pressen und der Wärmebehandlung, was wiederum eine Minimierung bzw. ein Vermeiden von Wirbelstromverlusten nach sich zieht. SMC-Werkstoffe sind dem Fachmann bekannt, so dass hier nicht weiter auf deren Zusammensetzung eingegangen werden soll.

Die Permanentmagnete bzw. die Oberflächenmagnete des Magnetrings bestehen insbesondere aus einem hartmagnetischen Material, beispielsweise einer Eisen-, Cobalt- oder Nickellegierung. Auch sind kunststoffgebundene Dauermagnete denkbar, deren Magnetpulver in einer Matrix aus Kunststoffbinder eingebettet ist. Das Magnetpulver kann beispielsweise aus Hartferrit, SmCo- und/oder NdFeB bestehen oder als eine AlNiCo-Legierung ausgebildet sein. Vorzugsweise ist der Kunststoffbinder als ein thermoplastischer Binder ausgebildet, beispielsweise aus Polyamid oder aus Polyphenylsulfid. Alternativ ist auch denkbar, dass der Kunststoffbinder als ein duroplastischer Binder ausgebildet ist, beispielsweise als ein Epoxydharz.

Oberflächenmagnete haben neben ihren zahlreichen Vorteilen gegenüber den vergrabenen Magneten den Nachteil einer geringeren mechanischen Festigkeit gegenüber Fliehkräften, die im Betrieb der Elektromaschine auf die Oberflächenmagnete einwirken. Um Defekte und Ausfälle zu vermeiden, kommt, neben der Verbesserung der mechanischen Festigkeit der Oberflächenmagneten selbst, daher ihre Befestigung auf dem Grundkörper eine wichtige Rolle zu.

Aus der US 2010/0045132 A1 ist ein Rotor für eine Elektromaschine bekannt, wobei der Rotor als ein aus einer Mehrzahl von Rotorlaminationen bestehendes Rotorblechpaket ausgebildet ist. Jede Rotorlamination ist aus einem Blech gestanzt und weist über ihren Umfang drei radiale Vorsprünge und drei radiale Einschnitte auf, wobei sich die Vorsprünge und die Einschnitte jeweils über einen Winkelbereich von 60° erstrecken. Benachbarte Rotorlaminationen sind mit einem Versatzwinkel von 60° zueinander gestapelt, damit sich während eines Fügevorgangs mit einem als Magnetring ausgebildeten hohlzylinderförmigen Körper ein Klebstoff über die Vorsprünge und Einschnitte verteilen kann. Um einen definierten Abstand zwischen den Vorsprüngen des Rotorblechpakets und des hohlzylinderförmigen Körpers zu erzielen, werden in den Klebstoff speziell geformte Abstandskörper eingebracht, so dass insbesondere temperaturbedingte Ausdehnungen des Rotorblechpakets bei starker Beanspruchung der Elektromaschine nicht zu einer Beschädigung, insbesondere ein Aufsprengen, des Magnetrings führen können.

Aus der US2005/225190 A1, der EP 1 737 105 A2, sowie der WO 2008/019932 A1 sind Rotoren für Elektromaschinen bekannt, welche ein Rotorblechpaket mit darauf angeordnetem Ringmagneten aufweisen.

Für die mechanischen Eigenschaften der Klebeverbindung zwischen dem Grundkörper und dem diesen umgebenden hohlzylinderförmigen Körper sind verschiedene Randbedingungen zu beachten, wie beispielsweise die Einhaltung eines definierten Klebespalts, um die Aushärtung des Klebstoffs sicherzustellen. Durch diesen Klebespalt kann es jedoch trotz Beimischung entsprechender Abstandskörper zu Rundlauffehlern des Rotors an der Magnetoberfläche kommen. Um etwaige Rundlauftoleranzen dennoch einhalten zu können, sind aufwändige Qualitätskontrollen (z.B. 100%-Messung des tatsächlichen Rundlaufs) notwendig. Die Messungen sowie der anfallende Ausschuss wirken sich dabei direkt auf die Herstellkosten der Elektromaschine aus.

Es ist Aufgabe der Erfindung, einen Rotor für eine Elektromaschine, insbesondere für eine bürstenlose Gleichstrommaschine, bereitzustellen, der bei minimalem Spiel zwischen einem Grundkörper des Rotors und einem diesen umgebenden hohlzylinderförmigen Körper einerseits optimale Rundlaufeigenschaften aufweist und andererseits einen definierten Klebespalt einhält, der eine optimale Verteilung und Aushärtung des Klebstoffs ohne Beimischung von abstandhaltenden Zusatzpartikeln gewährleistet.

### Vorteile der Erfindung

Die Erfindung betrifft einen Rotor für eine Elektromaschine, Elektromaschine nach Anspruch 1, insbesondere für eine bürstenlose Gleichstrommaschine, mit einem hohlzylinderförmigen Grundkörper, der drehfest mit einer Maschinenwelle verbunden ist. Zur Lösung der gestellten Aufgabe ist vorgesehen, dass der Grundkörper eine Mehrzahl über seine Mantelfläche in Umfangsrichtung und in axialer Richtung um einen definierten Versatzwinkel gegeneinander versetzter, radialer Ausbuchtungen aufweist, wobei jede radiale Ausbuchtung über einen Winkelbereich begrenzt ist, der kleiner ist als der Versatzwinkel, und wobei der hohlzylinderförmige Grundkörper mittels eines Fügeprozesses mit einem diesen in Umfangsrichtung umgebenden hohlzylinderförmigen Körper verklebt ist. Mit besonderem Vorteil ist auf diese Weise ein definierter Klebespalt zwischen dem Grundkörper und dem hohlzylinderförmigen Körper des Rotors erzielbar, mit dem einerseits die erforderliche mechanische Festigkeit der Klebeverbindung gewährleistet ist und der andererseits das Spiel zwischen den beiden zu fügenden Komponenten des Rotors minimiert, um auf diese Weise etwaige Rundlauffehler und daraus resultierenden Ausschuss zu vermeiden. Die radialen Ausbuchtungen verengen das Spiel zwischen den zu fügenden Komponenten lokal, sodass der mögliche Rundlauffehler ohne zusätzliche Beimischung von abstandhaltenden Zusatzpartikeln direkt minimiert wird. In allen anderen Bereichen zwischen den beiden Komponenten hingegen ist der definierte Klebespalt sichergestellt, um die Aushärtung des Klebstoffs und somit die mechanische Festigkeit der Klebeverbindung zu gewährleisten. Zudem gewährleistet die Erfindung eine axiale und radiale Durchlässigkeit des Klebstoffs, so dass sich dieser beim Fügevorgang ungehindert im gesamten Klebespalt verteilen kann.

Der hohlzylinderförmige Grundkörper ist durch ein aus Rotorlaminationen bestehendes Rotorblechpaket gebildet, wobei eine Mehrzahl der Rotorlaminationen jeweils mindestens eine radiale Ausbuchtung aufweist und aus der Mehrzahl von Rotorlaminationen mit zumindest einer radialen Ausbuchtung benachbarte Rotorlaminationen um den Versatzwinkel gegeneinander verdreht sind. Der Aufbau eines Rotorblechpakets aus einem Stapel von Rotorlaminationen ist besonders einfach zu realisieren und ermöglicht zudem einen besonders effektiven magnetischen Rückschluss. Durch die Mehrzahl an im Versatzwinkel gegeneinander verdrehten, benachbarten Rotorlaminationen mit radialer Ausbuchtung kann gezielt auf die Erfordernisse des verwendeten Klebstoffs hinsichtlich seiner Durchlässigkeit und Aushärtung Einfluss genommen werden. Durch die axialen und radialen Leerbereiche zwischen den radialen Ausbuchtungen kann sich der Klebstoff weiterhin gut über den gesamten Umfang des Klebespalts verteilen und wird nicht durch lokale Materialanhäufungen der Ausbuchtungen gestört.

Der hohlzylinderförmige Körper kann beispielsweise als ein Magnetring, eine Schutzhülse oder als ein Sensorring ausgebildet sein. Zudem ist es nicht erforderlich, dass der hohlzylinderförmige Körper den Grundkörper in axialer Richtung der Maschinenwelle vollständig umgibt. Ebenso sind auch hohlzylinderförmige Körper denkbar, die zumindest abschnittsweise über ihren Umfang kürzer, aber auch länger, als der Grundkörper sein können.

Der Versatzwinkel benachbarter Rotorlaminierungen mit mindestens einer radialen Ausbuchtung entspricht dabei mindestens dem doppelten Wert des Winkelbereichs der zumindest einen radialen Ausbuchtung. Vorzugsweise beträgt der Versatzwinkel mindestens 30°, besonders bevorzugt ca. 60°. Je nach verwendetem Klebstoff und dem damit verbundenen optimalen Klebespalt bzw. Fügevorgang überschreiten die radialen Ausbuchtungen des Grundkörpers bzw. des Rotorblechpakets über einen Winkelbereich von weniger als 30°, vorzugsweise von weniger als 20°, besonders bevorzugt von ca. 10°, den über die restliche Mantelfläche des Grundkörpers bzw. Rotorblechpakets vorliegenden Maximalradius um ca. 0,01 % bis 5 %, vorzugsweise um ca. 0,02 % bis 2 %.

Die Erfindung betrifft ferner ein Verfahren zur Herstellung eines Rotors für eine Elektromaschine nach Anspruch 5, insbesondere für eine bürstenlose Gleichstrommaschine, wobei zur Lösung der gestellten Aufgabe zumindest folgende Schritte vorgesehen sind:
- Verwenden von Rotorlaminationen für ein Rotorblechpaket des Rotors, wobei eine Mehrzahl von Rotorlaminationen jeweils mindestens eine über einen Winkelbereich begrenzte radiale Ausbuchtung aufweist,
- Stapeln der Rotorlaminationen zum Rotorblechpaket derart, dass aus der Mehrzahl von Rotorlaminationen mit zumindest einer radialen Ausbuchtung benachbarte Rotorlaminationen um einen definierten Versatzwinkel, der größer ist als der Winkelbereich der zumindest einen radialen Ausbuchtung, gegeneinander verdreht werden,
- Auftragen eines Klebstoffs auf einen Außenmantel des Rotorblechpakets, vorzugsweise zwischen die radialen Ausbuchtungen, und/oder auf eine Innenfläche eines hohlzylinderförmigen Körpers und
- Aufschieben des hohlzylinderförmigen Körpers auf das Rotorblechpaket.

Wie bereits eingangs erwähnt, gestaltet sich der Aufbau eines Rotorblechpakets aus einem Stapel von Rotorlaminationen besonders einfach. Durch die Mehrzahl an in einem definierten Versatzwinkel gegeneinander verdrehten, benachbarten Rotorlaminationen mit radialer Ausbuchtung kann gezielt auf die Erfordernisse des verwendeten Klebstoffs hinsichtlich seiner Durchlässigkeit und Aushärtung Einfluss genommen werden. Dabei entstehen durch einen Versatzwinkel, der größer ist als der Winkelbereich der zumindest einen radialen Ausbuchtung axiale und radiale Leerbereiche zwischen den radialen Ausbuchtungen, in denen sich der Klebstoff gut über den gesamten Umfang des Klebespalts verteilen kann, so dass es keine Störung durch lokale Materialanhäufungen der Ausbuchtungen gibt. Der Versatzwinkel, mit dem benachbarte Rotorlaminationen mit mindestens einer radialen Ausbuchtung gegeneinander verdreht werden, entspricht mindestens dem doppelten Wert des Winkelbereichs der zumindest einen radialen Ausbuchtung bzw. beträgt vorzugsweise mindestens 30°, besonders bevorzugt ca. 60°.

Nach dem Auftragen des Klebstoffs wird der hohlzylinderförmige Körper mit geringem Spiel auf die Ausbuchtungen des Rotorblechpakets aufgeschoben. Dabei kann vorgesehen sein, dass das Rotorblechpaket und der hohlzylinderförmige Körper während des Fügeprozesses gegeneinander verdreht werden. Beim Zusammenfügen von Rotorblechpaket und hohlzylinderförmigem Körper stellen die radialen Ausbuchtungen den ausreichenden Klebespalt sicher und minimieren zugleich lokal das Spiel zwischen den zu fügenden Komponenten. Dadurch wird der resultierende Rundlauffehler an der Außenseite des hohlzylinderförmigen Körpers zur Maschinenwelle minimiert, was die Herstellungskosten der Elektromaschine mit Bezug auf Ausschuss oder Nacharbeiten deutlich reduziert.

Weiterhin betrifft die Erfindung eine Elektromaschine, insbesondere eine bürstenlosen Gleichstrommaschine, mit einem erfindungsgemäßen Rotor bzw. mit einem nach dem erfindungsgemäßen Verfahren hergestellten Rotor sowie ein elektrisches Bearbeitungsgerät, insbesondere eine Elektrohandwerkzeugmaschine, mit einer entsprechenden Elektromaschine.

Als elektrisches Bearbeitungsgerät sollen im Kontext der Erfindung unter anderem akku- oder netzbetriebene Elektrowerkzeugmaschinen zur Bearbeitung von Werkstücken mittels eines elektrisch angetriebenen Einsatzwerkzeugs verstanden werden. Dabei kann das elektrische Bearbeitungsgerät sowohl als Elektrohandwerkzeug als auch als stationäre Elektrowerkzeugmaschine ausgebildet sein. Typische Elektrowerkzeugmaschinen sind in diesem Zusammenhang Hand- oder Standbohrmaschinen, Schrauber, Schlagbohrmaschinen, Bohrhämmer, Abrisshämmer, Hobel, Winkelschleifer, Schwingschleifer, Poliermaschinen oder dergleichen. Als elektrische Bearbeitungsgeräte kommen aber auch maschinengetriebene Gartengeräte wie Rasenmäher, Rasentrimmer, Astsägen oder dergleichen in Frage. Weiterhin ist die Erfindung auf Axialflussmaschinen in Haushalts- und Küchengeräten, wie Waschmaschinen, Trockner, Staubsauger, Mixer, etc. anwendbar.

### Ausführungsbeispiele

### Zeichnung

Die Erfindung wird im Folgenden anhand der Figuren 1 bis 6 beispielhaft erläutert, wobei gleiche Bezugszeichen in den Figuren auf gleiche Bestandteile mit einer gleichen Funktionsweise hindeuten.

Es zeigen:
- Fig. 1:: eine Querschnittsdarstellung einer dreiphasigen Elektromaschine, insbesondere einer dreiphasigen bürstenlosen Gleichstrommaschine, mit einem vier vergrabene Magnete aufweisenden Rotor nach dem Stand der Technik (Figur 1a) und mit einem vier Oberflächenmagnete aufweisenden Magnetring nach dem Stand der Technik (Figur 1b),
- Fig. 2:: ein Schaltbild einer Treiberschaltung nach dem Stand der Technik zur Ansteuerung der Elektromaschine nach Figur 1,
- Fig. 3:: ein Ausführungsbeispiel eines erfindungsgemäßen Rotorblechpakets in einer perspektivischen Ansicht,
- Fig. 4:: ein Ausführungsbeispiel einer erfindungsgemäßen Rotorlamination in einer Draufsicht,
- Fig. 5:: das erfindungsgemäße Rotorblechpaket gemäß Figur 3 mit übergeschobenem hohlzylinderförmigen Körper in einer stirnseitigen Ansicht und
- Fig. 6:: das erfindungsgemäße Rotorblechpaket gemäß der Figuren 3 und 5 mit übergeschobenem hohlzylinderförmigen Körper in einem axialen Schnitt.

### Beschreibung der Ausführungsbeispiele

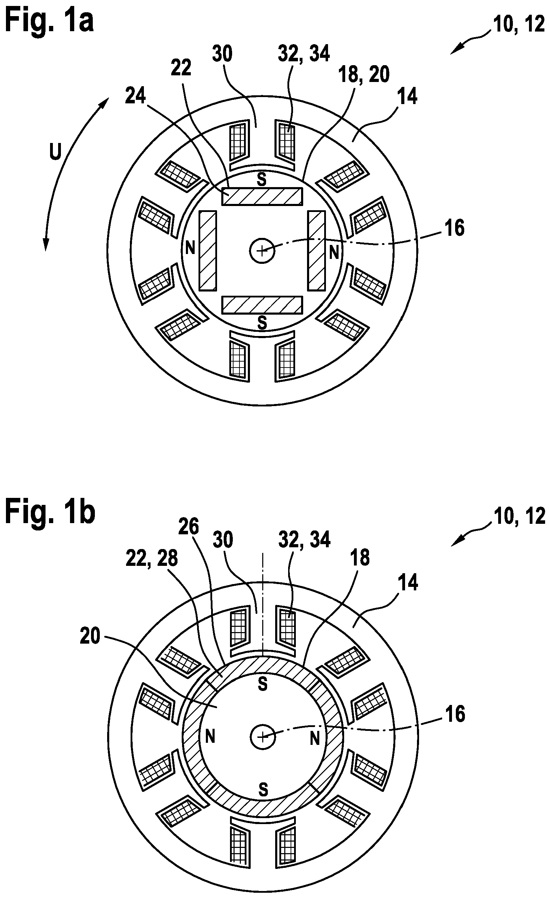

Die Figuren 1a und 1b zeigen jeweils eine Querschnittsdarstellung durch eine dreiphasige Elektromaschine 10, insbesondere eine dreiphasige bürstenlose Gleichstrommaschine 12, mit einem Stator 14 und einem drehfest auf einer Maschinenwelle 16 angeordneten Rotor 18 nach dem Stand der Technik. Die Elektromaschine 10 kann gleichermaßen als Elektromotor oder als Generator ausgebildet sein. Der Rotor 18 der Elektromaschine 10 umfasst einen hohlzylinderförmiger Grundkörper 20, der gemäß Figur 1a eine gerade Mehrzahl von in Taschen 22 vergrabener Permanentmagneten 24 aufweist, die sich in ihrer Polarität N, S in Umfangsrichtung U des Rotors 18 abwechseln. Figur 1b zeigt eine alternative Ausgestaltungsform des Rotors 18 mit einem als Magnetring ausgebildeten hohlzylinderförmigen Körper 26 mit entsprechenden als Oberflächenmagnete 28 ausgebildeten Permanentmagneten 22. In beiden Ausführungsbeispielen sind jeweils vier Permanentmagnete 22 dargestellt, die ihrerseits zwei Rotorpolpaare bilden. Die Statoren 14 gemäß der Figuren 1a und 1b weisen jeweils sechs radial nach innen gerichtete Statorzähne 30 auf, die ihrerseits jeweils eine Einzelzahnwicklung 32 einer Statorwicklung 34 tragen. Ein Stator 14 definiert mit seinen Statorzähnen 30 einen zylinderförmigen Hohlraum, in dem der Rotor 18 relativ zum Stator 14 drehbeweglich angeordnet ist. Mittels der Statorwicklung 34 wird ein drehendes magnetisches Feld erzeugt, welches den permanenterregten Rotor 18 im Motorbetrieb mitzieht. Alternativ ist ebenso denkbar, dass der Rotor 18 im Generatorbetrieb eine Spannung in die Statorwicklung 34 induziert.

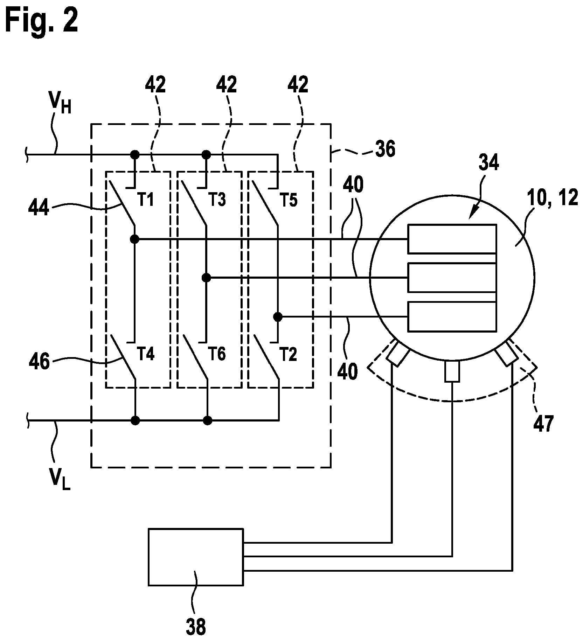

In Figur 2 ist ein Beispiel für eine Leistungsendstufe 36 dargestellt, die mit Hilfe einer Steuer- bzw. Regeleinheit 38 angesteuert wird. Die Leistungsendstufe 38 weist je Phasenstrang 40 der in einer Dreieckschaltung verschalteten Statorwicklung 34 eine als Inverterschaltung ausgebildete Halbbrücke 42 auf. Jede Halbrücke 42 besteht aus einem ersten Leistungsschalter 44, der mit einem hohen Versorgungspotenzial V_{H} (High Side) verbunden ist, und einem zweiten Leistungsschalter 46, der mit einem niedrigen Versorgungspotenzial V_{L} (Low Side) verbunden ist. Die Leistungsschalter 44, 46 können als Halbleiterschalter in Form von IGBT, IGCT, Thyristoren, Leistungs-MOSFETs oder dergleichen aber auch als Relais ausgebildet sein. Die Steuer- bzw. Regeleinheit 38 steuert die Leistungsschalter 44, 46 zur Bestromung von jeweils zwei Phasensträngen 40 entsprechend einer Pulsweitenmodulation (PWM) derart an, dass einer der ersten Leistungsschalter 44 (z.B. T1) einer der drei Halbbrücken 42 geschlossen ist, während die beiden anderen ersten Leistungsschalter 44 (T3, T5) geöffnet sind, und dass einer der zweiten Leistungsschalter 46 (z.B. T2) einer weiteren der Halbbrücken 42 geschlossen ist, während die beiden übrigen zweiten Leistungsschalter 46 (T4, T6) geöffnet sind. Auf diese Weise können zur Erzeugung des magnetischen Drehfelds im Wechsel die ersten Leistungsschalter 44 und die zweiten Leistungsschalter 46 mittels dreier Rotorlagesensoren 47, die beispielsweise als Hall-Sensoren ausgebildet sind, derart geschaltet werden, dass immer vier Einzelzahnwicklungen 28 der Statorwicklung 30 bestromt sind, so dass während des Betriebs die resultierende Statordurchflutung im Mittel senkrecht zur Rotordurchflutung orientiert ist. Dem Fachmann ist diese Art der Beschaltung bekannt, so dass hier nicht weiter darauf eingegangen werden soll.

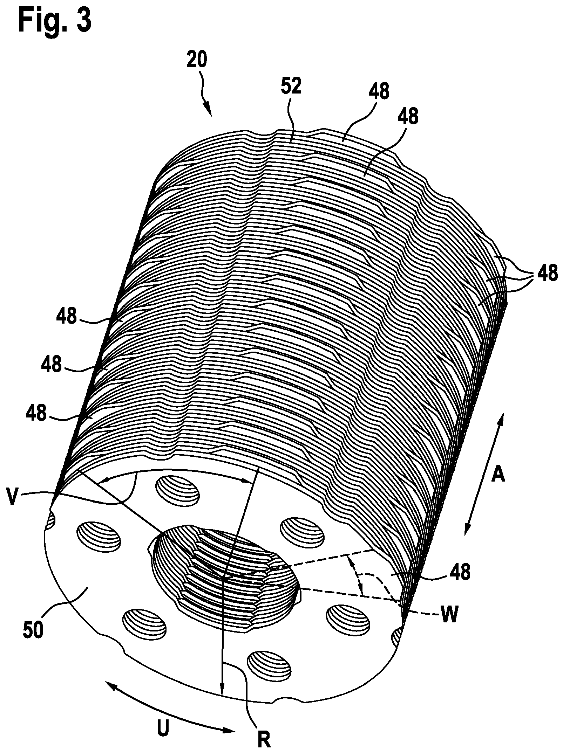

Erfindungsgemäß ist nun gemäß der Figuren 3 bis 6 vorgesehen, dass der drehfest mit der Motorwelle 16 verbundene hohlzylinderförmigen Grundkörper 20 des Rotors 18 eine Mehrzahl über seine Mantelfläche in Umfangsrichtung U und in axialer Richtung A um einen definierten Versatzwinkel V gegeneinander versetzter, radialer Ausbuchtungen 48 aufweist. Dabei ist gemäß Figur 3 jede radiale Ausbuchtung 48 über einen Winkelbereich W begrenzt, der kleiner ist als der Versatzwinkel V der radialen Ausbuchtungen 48. Figur 3 zeigt den Aufbau des hohlzylinderförmigen Grundkörpers 20 als ein aus Rotorlaminationen 50 bestehendes Rotorblechpaket 52. Die Rotorlaminationen 52 werden dazu entsprechend übereinander bzw. nebeneinander (je nach Betrachtungsrichtung) gestapelt.

Der Versatzwinkel V zweier in Umfangsrichtung U benachbarter radialer Ausbuchtungen 48 entspricht mindestens dem doppelten Wert des Winkelbereichs W der zumindest einen radialen Ausbuchtung 48. Vorzugsweise beträgt der Versatzwinkel V mindestens 30°, besonders bevorzugt ca. 60°.

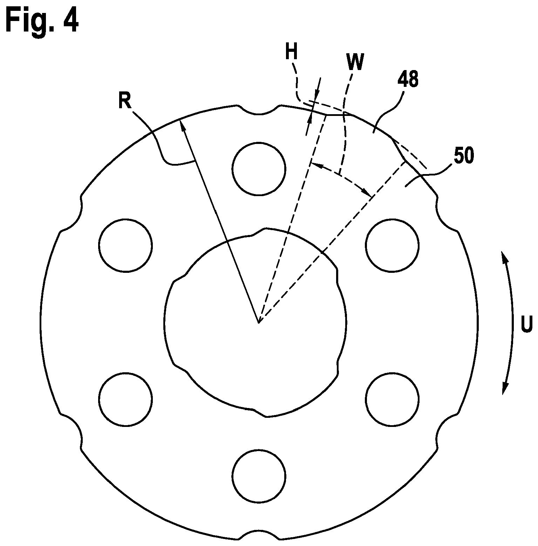

Mit Bezug auf das erfindungsgemäße Herstellungsverfahren des Rotors 18 weist eine Mehrzahl von Rotorlaminationen 50 des Rotorblechpakets 52 jeweils mindestens eine über den Winkelbereich W begrenzte radiale Ausbuchtung 48 auf. Figur 4 zeigt eine derartige Rotorlamination 50 in einer Draufsicht. Die Rotorlaminationen 50 werden nun derart zum Rotorblechpaket 52 gestapelt, dass aus der Mehrzahl von Rotorlaminationen 50 mit zumindest einer radialen Ausbuchtung 48 benachbarte Rotorlaminationen 50 um den definierten Versatzwinkel V gegeneinander verdreht werden. Dabei ist es durchaus möglich, in Abwandlung des Ausführungsbeispiels gemäß der Figur 3 zwischen Rotorlaminationen 50 mit mindestens einer radialen Ausbuchtung 48 auch solche ohne radiale Ausbuchtung vorzusehen. Ebenso ist es denkbar, Rotorlaminationen 50 mit mehreren radialen Ausbuchtungen 48, deren jeweiliger Winkelbereich W kleiner ist als der Versatzwinkel V, zu verwenden.

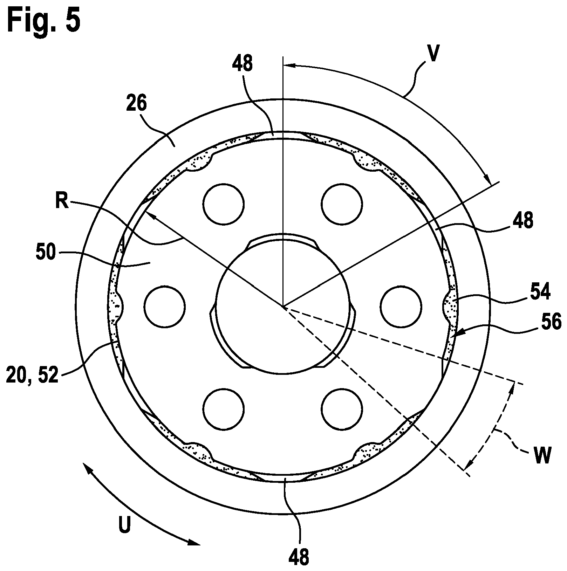

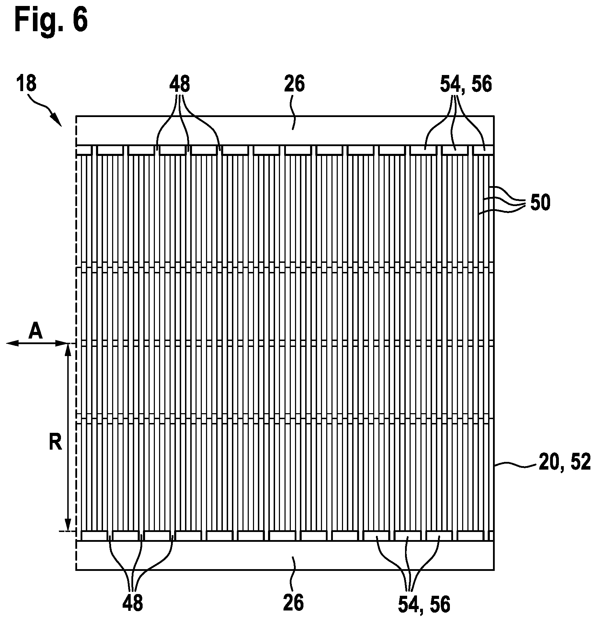

Gemäß Figur 5 wird für den Fügevorgang des Rotorblechpakets 52 bzw. des hohlzylinderförmigen Grundkörpers 20 mit dem ihm umgebenden hohlzylinderförmigen Körper 26 ein Klebstoff 54 auf den Außenmantel des Rotorblechpakets 52 bzw. des hohlzylinderförmigen Grundkörpers 20, vorzugsweise zwischen die radialen Ausbuchtungen 48, und/oder auf eine Innenfläche des hohlzylinderförmigen Körpers 26 aufgebracht und anschließend der hohlzylinderförmige Körper 26 gemäß Figur 6 in axialer Richtung A auf das Rotorblechpaket 52 bzw. den hohlzylinderförmigen Grundkörper 20 zur dauerhaften Verbindung beider Komponenten aufgeschoben, so dass zwischen ihnen ein Klebespalt 56 entsteht. Vorzugsweise werden dabei das Rotorblechpaket 52 und der hohlzylinderförmige Körper 26 während des Fügeprozesses gegeneinander verdreht. Zum Auffangen etwaiger temperaturbedingter Ausdehnungen des Rotorblechpakets 52 bzw. des hohlzylinderförmigen Grundkörpers 20 infolge eines Betriebs der Elektromaschine 10 mit hohen Leistungsanforderungen ist ein geringes Spiel zwischen den radialen Ausbuchtungen 48 und der Innenfläche des hohlzylinderförmigen Körpers 26 vorhanden. Der hohlzylinderförmiger Körper 26 ist in der Regel als ein Magnetring ausgebildet, der dieselbe axiale Baulänge aufweist, wie der Grundkörper 20. Es ist aber ohne Einschränkung der Erfindung ebenso möglich, dass der hohlzylinderförmige Körper 26 und der Grundkörper 20 unterschiedliche axiale Längen aufweisen. So kann der hohlzylinderförmige Körper 26 daher auch als eine Schutzhülse des Rotors 18, als ein Sensorring oder dergleichen ausgebildet sein.

Je nach verwendetem Klebstoff und dem damit verbundenen optimalen Klebespalt 56 bzw. Fügevorgang überschreiten die radialen Ausbuchtungen 48 des Grundkörpers 20 bzw. des Rotorblechpakets 52 über einen Winkelbereich W von weniger als 30°, vorzugsweise von weniger als 20°, besonders bevorzugt von ca. 10°, den über die restliche Mantelfläche des Grundkörpers 20 bzw. Rotorblechpakets 52 vorliegenden Maximalradius R um eine Höhe H von ca. 0,01 % bis 5 %, vorzugsweise von ca. 0,02 % bis 2 % (vgl. Figur 4).

Die radialen Ausbuchtungen 48 verengen somit einerseits das Spiel zwischen den zu fügenden Komponenten lokal, sodass der mögliche Rundlauffehler ohne zusätzliche Beimischung von abstandhaltenden Zusatzpartikeln direkt minimiert wird. Andererseits ist in allen anderen Bereichen zwischen den beiden Komponenten der definierte Klebespalt 56 sichergestellt, um die Aushärtung des Klebstoffs und somit die mechanische Festigkeit der Klebeverbindung zu gewährleisten und eine axiale und radiale Durchlässigkeit des Klebstoffs zu gewährleisten, so dass sich dieser beim Fügevorgang ungehindert im gesamten Klebespalt 56 verteilen kann.

Es sei abschließend noch darauf hingewiesen, dass die Erfindung weder auf das gezeigte Ausführungsbeispiel gemäß der Figuren 3 bis 6 noch auf die dargestellte Form und Anzahl der Rotorlaminationen 50 und ihrer radialen Ausbuchtungen 48 beschränkt ist.

## Patentansprüche

1. Rotor (18) für eine Elektromaschine (10), insbesondere für eine bürstenlose Gleichstrommaschine (12), mit einem hohlzylinderförmigen Grundkörper (20), der drehfest mit einer Maschinenwelle (16) verbunden ist und der durch ein aus Rotorlaminationen (50) bestehendes Rotorblechpaket (52) gebildet ist, wobei eine Mehrzahl der Rotorlaminationen (50) jeweils mindestens eine über einen Winkelbereich (W) begrenzte, radiale Ausbuchtung (48) aufweist, und die radialen Ausbuchtungen (48) benachbarter Rotorlaminationen (50) derart um einen definierten Versatzwinkel (V) gegeneinander verdreht sind, dass die radialen Ausbuchtungen (48) über die Mantelfläche des hohlzylinderförmigen Grundkörpers (20) in Umfangsrichtung (U) und in axialer Richtung (A) um den Versatzwinkel (V) gegeneinander versetzt sind, wobei der hohlzylinderförmige Grundkörper (20) mittels eines Fügeprozesses mit einem diesen in Umfangsrichtung (U) umgebenden hohlzylinderförmigen Körper (26) verklebt ist, **dadurch gekennzeichnet, dass** der Winkelbereich (W) kleiner ist als der Versatzwinkel (V), so dass zwischen den radialen Ausbuchtungen (48) des hohlzylinderförmigen Grundkörpers (20) in axialer Richtung (A) und in Umfangsrichtung (U) Leerbereiche verbleiben, wobei die Leerbereiche in axialer Richtung (A) größer sind als die Dicke einer Rotorlamination (50).

2. Rotor (18) nach Anspruch 1, **dadurch gekennzeichnet, dass** der Versatzwinkel (V) mindestens dem doppelten Wert des Winkelbereichs (W) der zumindest einen radialen Ausbuchtung (48) entspricht, vorzugsweise mindestens 30°, besonders bevorzugt ca. 60°, beträgt.

3. Rotor (18) nach einem der vorhergehenden Ansprüche, **dadurch gekennzeichnet, dass** die radialen Ausbuchtungen (48) des hohlzylinderförmigen Grundkörpers (20), insbesondere des Rotorblechpakets (52), über einen Winkelbereich (W) von weniger als 30°, vorzugsweise von weniger als 20°, besonders bevorzugt von ca. 10°, den über die restliche Mantelfläche des hohlzylinderförmigen Grundkörpers (20), insbesondere des Rotorblechpakets (52), vorliegenden Maximalradius (R) um eine Höhe (H) von ca. 0,01 % bis 5 %, vorzugsweise von ca. 0,02 % bis 2 %, überschreiten.

4. Rotor (18) nach einem der vorhergehenden Ansprüche, **dadurch gekennzeichnet, dass** der hohlzylinderförmige Körper (26) ein Magnetring, eine Schutzhülse oder ein Sensorring ist.

5. Verfahren zur Herstellung eines Rotors (18) für eine Elektromaschine (10), insbesondere für eine bürstenlose Gleichstrommaschine (12), mit zumindest folgenden Schritten:
• Verwenden von Rotorlaminationen (50) für ein Rotorblechpaket (52) des Rotors (18), wobei eine Mehrzahl von Rotorlaminationen (50) jeweils mindestens eine über einen Winkelbereich (W) begrenzte radiale Ausbuchtung (48) aufweist,
• Stapeln der Rotorlaminationen (50) zum Rotorblechpaket (52), wobei aus der Mehrzahl von Rotorlaminationen (50) mit zumindest einer radialen Ausbuchtung (48) benachbarte Rotorlaminationen (50) um einen definierten Versatzwinkel (V), der größer ist als der Winkelbereich (W) der zumindest einen radialen Ausbuchtung (48), gegeneinander derart verdreht werden, dass die radialen Ausbuchtungen (48) über die Mantelfläche des Rotorblechpakets (52) in Umfangsrichtung (U) und in axialer Richtung (A) um den Versatzwinkel (V) gegeneinander versetzt sind und zwischen den radialen Ausbuchtungen (48) des Rotorblechpakets (52) in axialer Richtung (A) und in Umfangsrichtung (U) Leerbereiche verbleiben, wobei die Leerbereiche in axialer Richtung (A) größer sind als die Dicke einer Rotorlamination (50),
• Auftragen eines Klebstoffs (54) auf einen Außenmantel des Rotorblechpakets (52), vorzugsweise zwischen die radialen Ausbuchtungen (48), und/oder auf eine Innenfläche eines hohlzylinderförmigen Körpers (26) und
• Aufschieben des hohlzylinderförmigen Körpers (26) auf das Rotorblechpaket (52).

6. Verfahren nach Anspruch 5, **dadurch gekennzeichnet, dass** der hohlzylinderförmige Körper (26) mit geringem Spiel auf die Ausbuchtungen (48) des Rotorblechpakets (52) aufgeschoben wird.

7. Verfahren nach einem der vorhergehenden Ansprüche 5 oder 6, **dadurch gekennzeichnet, dass** der Versatzwinkel (V), mit dem die Rotorlamination (50) gegenüber der benachbarten Rotorlamination (50) verdreht wird, mindestens dem doppelten Wert des Winkelbereichs (W) der zumindest einen radialen Ausbuchtung (48) entspricht, vorzugsweise mindestens 30°, besonders bevorzugt ca. 60°, beträgt.

8. Verfahren nach einem der vorhergehenden Ansprüche 5 bis 7, **dadurch gekennzeichnet, dass** während des Fügeprozesses das Rotorblechpaket (52) und der hohlzylinderförmige Körper (26) gegeneinander verdreht werden.

9. Elektromaschine (10), insbesondere bürstenlose Gleichstrommaschine (12), mit einem Rotor (18) nach einem der vorhergehenden Ansprüche 1 bis 4 oder mit einem nach dem Verfahren gemäß der vorhergehenden Ansprüche 5 bis 8 hergestellten Rotor (18).

10. Elektrisches Bearbeitungsgerät, insbesondere Elektrohandwerkzeugmaschine, mit einer Elektromaschine (10) nach Anspruch 9.

## Claims

1. Rotor (18) for an electric machine (10), in particular for a brushless direct-current machine (12), with a hollow-cylindrical core (20), which is connected non-rotatably to a machine shaft (16) and which is formed by a rotor blade stack (52) consisting of rotor laminations (50), wherein a plurality of rotor laminations (50) each have at least one radial bulge (48) delimited over an angular range (W) and the radial bulges (48) of adjacent rotor laminations (50) are rotated relative to one another by a defined offset angle (V) in such a way that the radial bulges (48) are offset relative to one another by the offset angle (V) in the circumferential direction (U) and in the axial direction (A) over the outer surface of the hollow-cylindrical core (20), wherein the hollow-cylindrical core (20) is adhesively bonded to a hollow-cylindrical body (26) surrounding the latter in the circumferential direction (U) by means of a joining process, **characterized in that** the angular range (W) is smaller than the offset angle (V), so that empty spaces remain between the radial bulges (48) of the hollow-cylindrical core (20) in the axial direction (A) and in the circumferential direction (U), wherein the empty spaces are larger in the axial direction (A) than the thickness of a rotor lamination (50).

2. Rotor (18) according to Claim 1, **characterized in that** the offset angle (V) corresponds to at least twice the value of the angular range (W) of the at least one radial bulge (48) and is preferably at least 30°, particularly preferably approximately 60°.

3. Rotor (18) according to either of the preceding claims, **characterized in that** the radial bulges (48) of the hollow-cylindrical core (20), in particular of the rotor blade stack (52), over an angular range (W) of less than 30°, preferably less than 20°, particularly preferably approximately 10°, exceed the maximum radius (R) that exists over the remaining outer surface of the hollow-cylindrical core (20), in particular of the rotor blade stack (52), by a height (H) of approximately 0.01% to 5%, preferably by approximately 0.02% to 2%.

4. Rotor (18) according to any of the preceding claims, **characterized in that** the hollow-cylindrical body (26) is a magnetic ring, a protective sleeve, or a sensor ring

5. Method for producing a rotor (18) for an electric machine (10), in particular for a brushless direct-current machine (12), with at least the following steps:
• using rotor laminations (50) for a rotor blade stack (52) of the rotor (18), wherein a plurality of rotor laminations (50) each have at least one radial bulge (48) delimited over an angular range (W),
• stacking the rotor laminations (50) to form the rotor blade stack (52), wherein adjacent rotor laminations (50) of the plurality of rotor laminations (50) with at least one radial bulge (48) are rotated relative to one another by a defined offset angle (V) which is larger than the angular range (W) of the at least one radial bulge (48) in such a way that the radial bulges (48) are offset relative to one another by the offset angle (V) in the circumferential direction (U) and in the axial direction (A) over the outer surface of the rotor blade stack (52) and empty spaces remain between the radial bulges (48) of the rotor blade stack (52) in the axial direction (A) and in the circumferential direction (U), wherein the empty spaces are larger in the axial direction (A) than the thickness of a rotor lamination (50),
• applying an adhesive (54) to an outer surface of the rotor blade stack (52), preferably between the radial bulges (48), and/or to an inner surface of a hollow-cylindrical body (26), and
• pushing the hollow-cylindrical body (26) onto the rotor blade stack (52).

6. Method according to Claim 5, **characterized in that** the hollow-cylindrical body (26) is pushed onto the bulges (48) of the rotor blade stack (52) with a small amount of play.

7. Method according to either of the preceding Claims 5 and 6, **characterized in that** the offset angle (V) by which the rotor lamination (50) is rotated relative to the adjacent rotor lamination (50) corresponds to at least twice the value of the angular range (W) of the at least one radial bulge (48) and is preferably at least 30°, particularly preferably approximately 60°.

8. Method according to any of the preceding Claims 5 to 7, **characterized in that** the rotor blade stack (52) and the hollow-cylindrical body (26) are rotated relative to each other during the joining process.

9. Electric machine (10), in particular brushless direct-current machine (12), with a rotor (18) according to any of the preceding Claims 1 to 4 or with a rotor (18) produced according to the method according to the preceding Claims 5 to 8.

10. Electric treatment device, in particular electric handheld machine tool, with an electric machine (10) according to Claim 9.

## Revendications

1. Rotor (18) pour une machine électrique (10), en particulier pour une machine à courant continu sans balai (12), avec un corps de base cylindrique creux (20), qui est relié de manière solidaire en rotation à un arbre de machine (16) et qui est formé par un paquet de tôles (52) de rotor constitué de tôles laminées (50) de rotor, une multitude de tôles laminées (50) de rotor comportant chacune au moins un renflement radial (48) délimité sur une zone angulaire (W), et les renflements radiaux (48) de tôles laminées (50) de rotor adjacentes étant tournés les uns à l'encontre des autres d'un angle de décalage (V) défini de telle manière que les renflements radiaux (48) sont décalés les uns à l'encontre des autres de l'angle de décalage (V) dans la direction périphérique (U) et dans la direction axiale (A) par la surface d'enveloppe du corps de base cylindrique creux (20), le corps de base cylindrique creux (20) étant collé au moyen d'un processus d'assemblage à un corps cylindrique creux (26) entourant celui-ci dans la direction périphérique (U), **caractérisé en ce que** la zone angulaire (W) est inférieure à l'angle de décalage (V), de telle sorte que des zones vides subsistent entre les renflements radiaux (48) du corps de base cylindrique creux (20) dans la direction axiale (A) et dans la direction périphérique (U), les zones vides étant plus grandes dans la direction axiale (A) que l'épaisseur d'une tôle laminée (50) de rotor.

2. Rotor (18) selon la revendication 1, **caractérisé en ce que** l'angle de décalage (V) correspond au moins au double de la valeur de la zone angulaire (W) de l'au moins un renflement radial (48), de préférence à au moins 30°, de manière particulièrement préférée à environ 60°.

3. Rotor (18) selon l'une des revendications précédentes, **caractérisé en ce que** les renflements radiaux (48) du corps de base cylindrique creux (20), en particulier du paquet de tôles (52) de rotor, dépassent, sur une zone angulaire (W) inférieure à 30°, de préférence inférieure à 20°, de manière particulièrement préférée d'environ 10°, le rayon maximal (R) présent sur la surface d'enveloppe restante du corps principal cylindrique creux (20), en particulier du paquet de tôles (52) de rotor, d'une hauteur (H) d'environ 0,01 % à 5 %, de préférence d'environ 0,02 % à 2 %.

4. Rotor (18) selon l'une des revendications précédentes, **caractérisé en ce que** le corps cylindrique creux (26) est un anneau magnétique, une douille de protection ou un anneau de détection.

5. Procédé de fabrication d'un rotor (18) pour une machine électrique (10), en particulier pour une machine à courant continu sans balai (12), avec au moins les étapes suivantes :
• utilisation de tôles laminées de rotor (50) pour un paquet de tôles (52) de rotor du rotor (18), une multitude de tôles laminées de rotor (50) comportant chacune au moins un renflement radial (48) délimité sur une zone angulaire (W),
• empilement des tôles laminées de rotor (50) pour former le paquet de tôles (52) de rotor, des tôles laminées de rotor adjacentes (50) parmi la multitude de tôles laminées de rotor (50) avec au moins un renflement radial (48) étant tournées les unes à l'encontre des autres d'un angle de décalage (V) défini, qui est plus grand que la zone angulaire (W) de l'au moins un renflement radial (48) de telle manière que les renflements radiaux (48) sont décalés les uns à l'encontre des autres de l'angle de décalage (V) dans la direction périphérique (U) et dans la direction axiale (A) par la surface d'enveloppe du paquet de tôles (52) de rotor et des zones vides subsistent entre les renflements radiaux (48) du paquet de tôles (52) de rotor dans la direction axiale (A) et dans la direction périphérique (U), les zones vides étant plus grandes dans la direction axiale (A) que l'épaisseur d'une tôle laminée de rotor (50),
• application d'un adhésif (54) sur une enveloppe extérieure du paquet de tôles (52) de rotor, de préférence entre les renflements radiaux (48), et/ou sur une surface intérieure d'un corps cylindrique creux (26) et
• enfilement du corps cylindrique creux (26) sur le paquet de tôles (52) de rotor.

6. Procédé selon la revendication 5, **caractérisé en ce que** le corps cylindrique creux (26) est enfilé avec peu de jeu sur les renflements (48) du paquet de tôles (52) de rotor.

7. Procédé selon l'une des revendications précédentes 5 ou 6, **caractérisé en ce que** l'angle de décalage (V), selon lequel la tôle laminée de rotor (50) est tournée par rapport à la tôle laminée de rotor (50) adjacente, correspond au moins au double de la valeur de la zone angulaire (W) de l'au moins un renflement radial (48), de préférence est d'au moins 30°, de manière particulièrement préférée d'environ 60°.

8. Procédé selon l'une des revendications précédentes 5 à 7, **caractérisé en ce que** le paquet de tôles (52) de rotor et le corps cylindrique creux (26) sont tournés l'un à l'encontre de l'autre pendant le processus d'assemblage.

9. Machine électrique (10), en particulier machine à courant continu sans balai (12), avec un rotor (18) selon l'une des revendications précédentes 1 à 4 ou avec un rotor (18) fabriqué selon le procédé selon les revendications précédentes 5 à 8.

10. Appareil d'usinage électrique, en particulier machine-outil manuelle électrique, avec une machine électrique (10) selon la revendication 9.
